# EUROPEAN PATENT APPLICATION

(11) **EP 2 281 448 A2**
(43) Date of publication of application: **09.02.2011**
(21) Application number: 09012676.4
(22) Date of filing: 07.10.2009
(51) Int. Cl.: A01K 1/01

(54) **Rascal dog litter box**

(30) Priority: 30.07.2009 US 270133 P
(71) Applicant: Kalia, Chand Swroop, Chadsmoor Cannock Staffordshire WS11 5DZ (GB)
(72) Inventor: Tierney, Patricia, Ann, Cape Coral Florida 33914 (US); Kalia, Chand Swroop, Cannock Staffordshire WS11 5DZ (GB)

(57) **Abstract**

Rascal Dog Litter Box is a dog litter box (Fig 5) for dogs, which has a dual purpose (Fig 8 and Fig 5) in which the synthetic grass or a pad can be used. The synthetic grass is semi-permeable which allows liquid waste to pass through and the solid waste remains at the top, which is easy to clean. This solves the problem of dogs creating a mess in doors.

## Description

### FIELD OF INVENTION

The invention is a litter box where by pets are able to relieve themselves indoors sans the messy clean up, and more particularly to dogs.

### BACKGROUND OF THE INVENTION

Dogs are subject to the same natural need of release as all other pets and it is normal for dogs to be taken outside to relieve it-self. However, in certain climatic conditions and for time saving purposes this is not always convenient as for many other reasons. It became a necessity to improve on the messy old newspaper routine and find a better way. This improved litter box is a much more expedient commodity.

### SUMMARY OF INVENTION

The primary objective is to produce a dog litter box that is practical, inexpensive and is easy to maintain.

To this end, the simplistic arrangement of this litter box provides ease of access to the dog. The litter box is a dual purpose box and contains both a puppy pad and synthetic grass which can be used interchangeably.

The grass comes scented to attract dogs to use the litter box. In addition, the grass covers up unsightly dried urine stains. It has rubber backing, which helps to control and contain odours in the box, and factory installed holes to allow urine to flow freely.

The litter box is easy to clean and the grass is machine washable.

Unlike other "flat" tray type boxes that have no depth to them with this dog litter box your dog can step into an easily accessible lower front lip of the unit. The sides on the litter box are six inches high which allow for males to lift their leg so urine will not hit the walls or floors. The six inch sides on the box contain the mess, unlike "flat litter trays". Having sides on a box is equally important for female dogs. Their back end won't hang over the side as it would on a "tray" litter box.

The dog litter box is therefore dependable, durable, neat and attractive. This will become evident on the examination of the following designs.

Having a dog litter box will be beneficial to the house owner, as this will help eliminate doggy waste without the messy environment.

### DETAILED DESCRIPTION

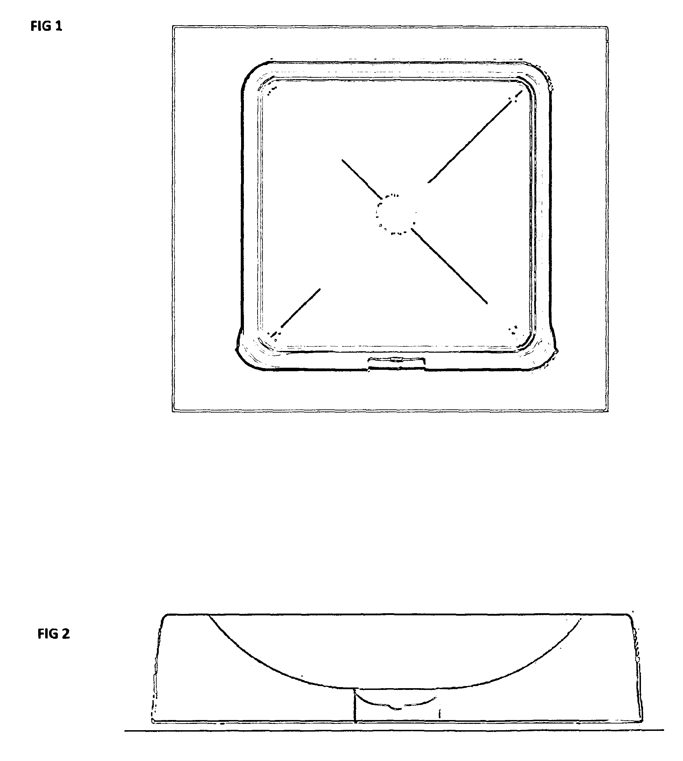

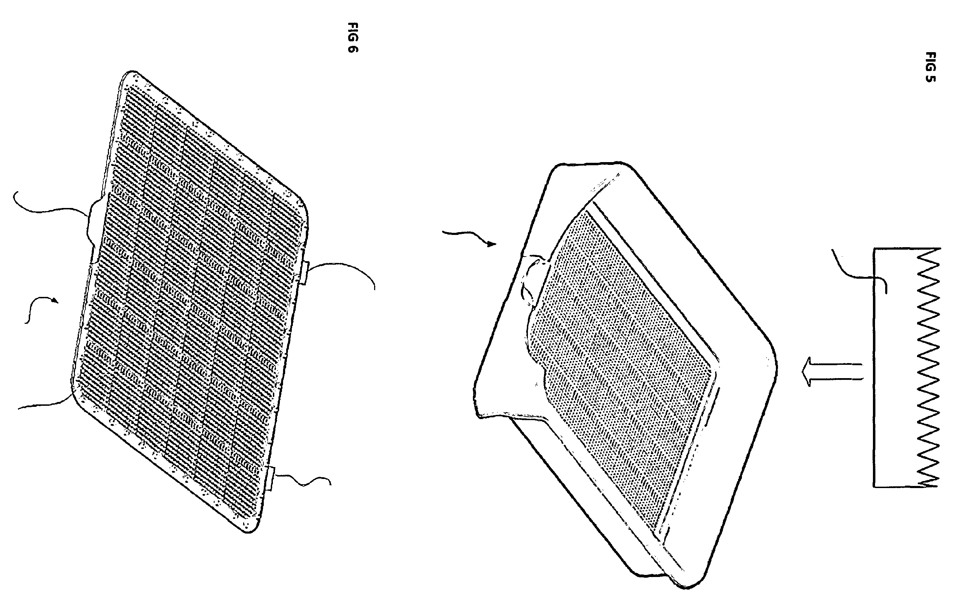

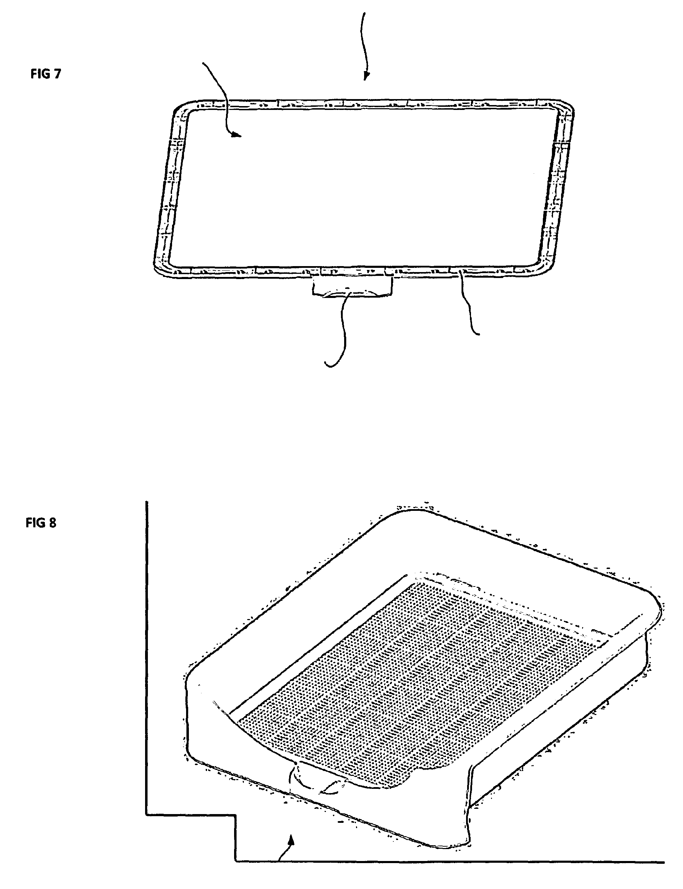

The litter box is an assembly (Fig 1) of a housing comprising two side walls, a bottom and front and back sides defining a well. The housing (Fig 2) has an open top and has an opening in the front side to permit ingress and egress for a dog. The litter box (Fig 3) consists of an easy grip curved edge, which allows for effortless lifting of the box. The front of the litter box is lowered to make it more manageable for the dog to get in and out. At the base (Fig 4) of the litter box, there are anti-skid mats at the four corners to keep it in place. The litter box (Fig 5) consists of synthetic grass, a grid and a frame. The synthetic grass is configured with a rubber bass and perforations to allow liquid waste to filter through to the bottom of the box, thus separating liquid and solid waste. It gives an outdoor feel and natural look and as such a dog will not feel intimidated. It is made of sturdy durable material which will hold the weight of a dog. The grass is designed to help with the containing and controlling of odours and covers unsightly stained urine. The grid ( Fig 6) acts as a base to keep the grass stable and gives a raise so as to contain more liquid in the litter box. The frame (Fig 7) locks the grid in place. Puppy pads (Fig 8) can be placed on the grid and locked in by the frame to stay in position as an option to the synthetic grass. Thus this is a dual purpose litter box. Newspapers or other absorbents can be placed at the inside bottom of the litter box before the fitting of the grid to soak up the liquid waste. A bag is supplied to wash the synthetic grass. The grass is easily picked up and placed in the bag for washing purposes. The frame, grid, and litter box can be cleaned with a wet cloth/rag or as preferred by the dog owner.

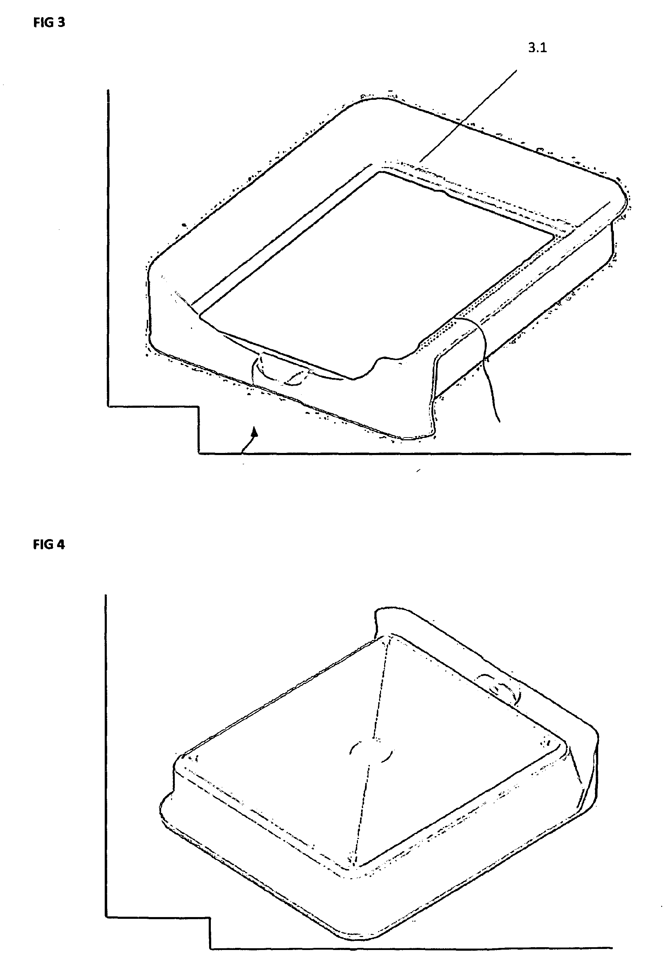

The housing has depressions ( Fig 3.1) disposed in the back side of the housing configured to receive extension tabs disposed on a back edge of the grid, for locking the grid to the housing. The housing also has ridges disposed a distance above the depressions such that when the locking frame is disposed on top of the grid, and the grid is locked to the housing via the extension tabs, the back edge of the locking frame fits snug underneath the tabs. Female cylindrical connectors on the grid are configured to mate with male cylindrical connectors on the locking frame.

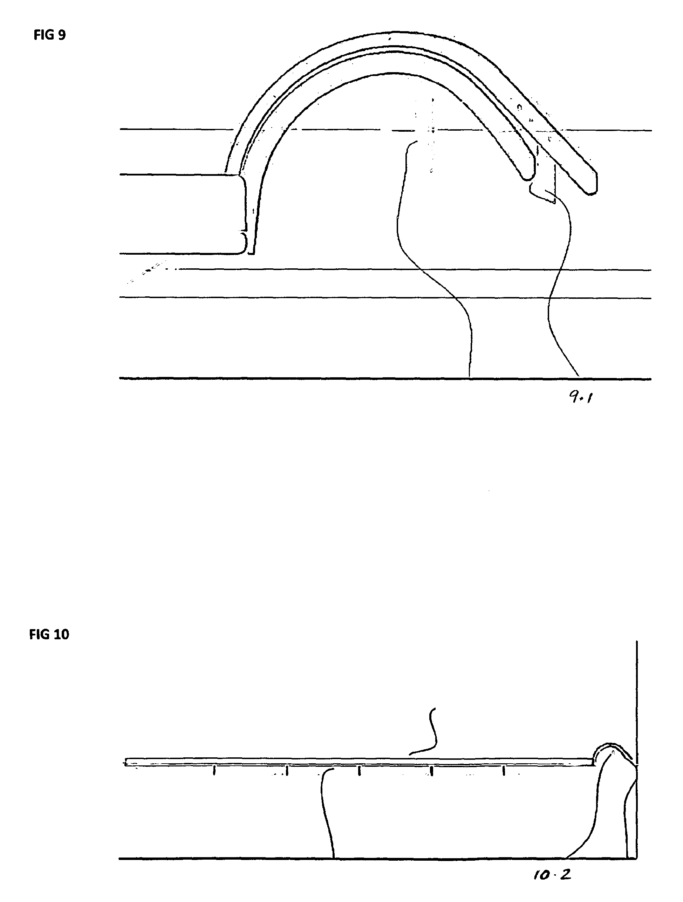

Referring to Figs. 9 and 10, the dog litter box has a locking mechanism (9.1) for securing front sides of the locking frame and grid to the housing and the front sides of the grid and locking frame to each other (10.2).

While various embodiments of the present invention have been described above, it should be understood that they have been presented by way of example only, and not of limitation. Likewise, the various diagrams may depict an example architectural or other configuration for the invention, which is done to aid in understanding the features and functionality that can be included in the invention. The invention is not restricted to the illustrated example architectures or configurations, but the desired features can be implemented using a variety of alternative architectures and configurations. Indeed, it will be apparent to one of skill in the art how alternative functional, logical or physical partitioning and configurations can be implemented to implement the desired features of the present invention. In addition, a multitude of different constituent module names other than those depicted herein can be applied to the various partitions.

Although the invention is described above in terms of various exemplary embodiments and implementations, it should be understood that the various features, aspects and functionality described in one or more of the individual embodiments are not limited in their applicability to the particular embodiment with which they are described, but instead can be applied, alone or in various combinations, to one or more of the other embodiments of the invention, whether or not such embodiments are described and whether or not such features are presented as being a part of a described embodiment. Thus the breadth and scope of the present invention should not be limited by any of the above-described exemplary embodiments.

Terms and phrases used in this document, and variations thereof, unless otherwise expressly stated, should be construed as open ended as opposed to limiting. As examples of the foregoing: the term "including" should be read as meaning "including, without limitation" or the like; the term "example" is used to provide exemplary instances of the item in discussion, not an exhaustive or limiting list thereof; the terms "a" or "an" should be read as meaning "at least one," "one or more" or the like; and adjectives such as "conventional," "traditional," "normal," "standard," "known" and terms of similar meaning should not be construed as limiting the item described to a given time period or to an item available as of a given time, but instead should be read to encompass conventional, traditional, normal, or standard technologies that may be available or known now or at any time in the future. Likewise, where this document refers to technologies that would be apparent or known to one of ordinary skill in the art, such technologies encompass those apparent or known to the skilled artisan now or at any time in the future.

A group of items linked with the conjunction "and" should not be read as requiring that each and every one of those items be present in the grouping, but rather should be read as "and/or" unless expressly stated otherwise. Similarly, a group of items linked with the conjunction "or" should not be read as requiring mutual exclusivity among that group, but rather should also be read as "and/or" unless expressly stated otherwise. Furthermore, although items, elements or components of the invention may be described or claimed in the singular, the plural is contemplated to be within the scope thereof unless limitation to the singular is explicitly stated. In addition, when a single callout line in the drawings leads to two or more separate reference numbers (first, second, etc. reference numbers), (and each reference numeral refers to a different piece of text in the detailed description) and it would be inconsistent to designate the drawing item being called out as both pieces of text, the drawing be interpreted as illustrating two different variants. In one variant, the drawing item is referred to by the first reference number and in another variant the drawing item is referred to by the second reference number, etc.

The presence of broadening words and phrases such as "one or more," "at least," "but not limited to" or other like phrases in some instances shall not be read to mean that the narrower case is intended or required in instances where such broadening phrases may be absent.

The use of the term "module" does not imply that the components or functionality described or claimed as part of the module are all configured in a common package. As will become apparent to one of ordinary skill in the art after reading this document, the illustrated embodiments and their various alternatives can be implemented without confinement to the illustrated examples.

## Claims

1. A dog litter box comprising parts which include materials for containing waste matter: a grass surface made from a synthetic durable substance designed to fit within said litter box; said grass surface has perforations for the satisfactory outlet of liquid waste but containment of solid waste; said grass surface rests on a solid grid locked in by solid frame; said grid carries characteristics for the free flow of liquid; said litter box has easy accessible front opening.

2. A dog litter box consistent with claim 1 whereby said grass surface is scented to attract dogs

3. A dog litter box consistent with claim 1 whereby said grass surface is machine washable

4. A dog litter box consistent with claim 3 whereby said grass surface can be washed in bag provided

5. A dog litter box consistent with claim 1 whereby said solid grid has inverted groove

6. A dog litter box consistent with claim 1 whereby said frame is slotted into the box with the grid or pad.
